# DEMANDE DE BREVET EUROPEEN

(11) **EP 0 908 986 A2**
(43) Date de publication de la demande: **14.04.1999**
(21) Numéro de dépôt: 98402363.0
(22) Date de dépôt: 25.09.1998
(51) Int. Cl.: H01S 3/06, G01N 21/88

(54) **Disque amplificateur laser et procédé de contrôle du collage du disque**

(30) Priorité: 07.10.1997 FR 9712467
(71) Demandeur: GIAT INDUSTRIES, 78000 Versailles (FR)
(72) Inventeur: Licchesi, Victor, 42000 Saint Etienne (FR)
(74) Mandataire: Célanie, Christian

(57) **Abrégé**

L'invention concerne un disque amplificateur laser comprenant un verre (2) phosphate dopé au néodyne et un bardage (3) constitué d'un verre phosphate dopé au cuivre destiné à piéger les photons parasites.

L'assemblage des deux verres (2,3) est obtenu à l'aide d'un film de colle (6) d'épaisseur comprise entre environ 5 et 35 µm. Le film de colle (6) est constitué par une couche de résine époxy et présente une épaisseur comprise entre 20 et 30 µm environ, et en particulier 25 µm. L'invention concerne aussi un procédé pour contrôler le collage du bardage (3).

## Description

Le domaine technique de la présente invention est celui des disques amplificateurs laser et des procédés de contrôle du bardage de ces disques.

Pour obtenir des lasers de très haute puissance, par exemple de l'ordre du mégajoule, il est prévu d'utiliser un certain nombre de disques amplificateurs disposés sur le trajet du faisceau et qui réalisent un pompage optique. Il se produit toutefois des phénomènes parasites de nature oscillante limitant le gain de l'amplificateur laser. Ces phénomènes sont liés à la production d'un grand nombre de photons émis par amplification stimulée sous un angle supérieur à l'angle limite de réflexion totale. Les photons piégés entre les faces des disques amplificateurs se réfléchissent jusqu'à atteindre les tranches de ceux-ci. Si les pertes totales sur les tranches des disques sont inférieures au gain, les oscillations parasites peuvent durer indéfiniment. Un autre phénomène parasite vient des photons émis parallèlement aux surfaces des disques, qui vont se réfléchir normalement à la surface de la tranche des disques. De la même manière, le phénomène peut durer indéfiniment si les pertes par réflexion sur la tranche des disques sont inférieures au gain. C'est la raison pour laquelle on a proposé de réaliser un bardage des disques amplificateurs en disposant un piège incliné laissant passer ces photons au-delà des disques sans possibilité de retour.

On connaît des disques amplificateurs laser obtenus en surmoulant à chaud un verre phosphate dopé au cuivre sur la périphérie du disque. Cependant, ce surmoulage est très délicat à mettre en oeuvre et est très onéreux. Il a pour inconvénient supplémentaire d'induire des contraintes importantes au bord du disque.

Le but de la présente invention est de proposer un nouveau disque amplificateur, ainsi qu'un procédé de contrôle de celui-ci.

A cet effet, l'invention propose un disque amplificateur laser comprenant un verre phosphate dopé au néodyne et au un bardage constitué d'un verre phosphate dopé au cuivre pour piéger des photons parasites, ce disque étant caractérisé en ce que l'assemblage des deux verres est obtenu à l'aide d'un film de colle ayant une épaisseur comprise entre environ 5 et 35 µm.

A titre d'exemple, le film de colle est constitué par une couche de résine époxy d'une épaisseur comprise entre environ 20 et 30 µm, par exemple de l'ordre de 25 µm environ.

L'invention propose également un procédé pour contrôler le collage du bardage d'un disque amplificateur laser, procédé qui est caractérisé en ce qu'il consiste :
- à réaliser une lame à faces parallèles en disposant au voisinage du bardage collé un bardage supplémentaire identique en position inversée pour obtenir une incidence normale à la direction d'observation,
- à éclairer normalement le film de colle à travers les deux épaisseurs de bardage,
- à repérer à l'aide d'une caméra les défauts de collage des deux verres collés, et
- à numériser l'image obtenue en niveaux de gris pour repérer les défauts du film de colle et mesurer leur taille.

Selon une autre caractéristique du procédé, on éclaire en plus latéralement le film de colle de part et d'autre de celui-ci.

Avantageusement, la caméra utilisée est du type CCD, l'éclairage est effectué à l'aide d'une source lumineuse halogène ou fluorescente, et l'éclairage normal est transmis par un anneau de fibres optiques disposé autour de l'objectif de la caméra, alors que l'éclairage latéral est transmis par des fibres optiques disposées de part et d'autre du film de colle.

Ainsi, l'invention vise à remplacer le surmoulage par un collage qui présente une facilité de réalisation avec la possibilité de retoucher les ratés de fabrication, réduisant ainsi le coût de production des disques amplificateurs. Toutefois, le collage nécessite des procédés de mise en oeuvre parfaitement contrôlés pour éliminer les défauts (rayures, poussières, bulles d'air, délamination) générateurs de défauts parasites. C'est pourquoi le collage doit être contrôlé sitôt le disque obtenu et on a opté pour un procédé de contrôle par analyse d'images permettant de cartographier les défauts du collage optiques entre le bardage et le disque. Un film de colle représente dans le cadre de l'invention une surface de l'ordre de 800 mm x 40 mm à l'interface des deux verres.

Le procédé selon l'invention permet de détecter et de mesurer avec une résolution de l'ordre de 5 µm, les défauts du film de colle, de repérer et mémoriser la position de ces défauts sur la surface analysée et de calculer l'incidence de ces défauts par rapport à la surface totale examinée.

D'autres caractéristiques, avantages et détails de l'invention apparaîtront plus clairement à la lecture du complément de description donné ci-après en relation avec des dessins sur lesquels :
- la figure 1 est une vue en coupe partielle d'un disque selon l'invention,
- la figure 2 est une représentation schématique des moyens pour rattraper le décalage lié à l'inclinaison du bardage pour la mise en oeuvre du procédé,
- la figure 3 représente schématiquement l'installation de contrôle pour la mise en oeuvre du procédé, et
- la figure 4 est un exemple de réalisation d'un poste de contrôle pour la mise en oeuvre du procédé.

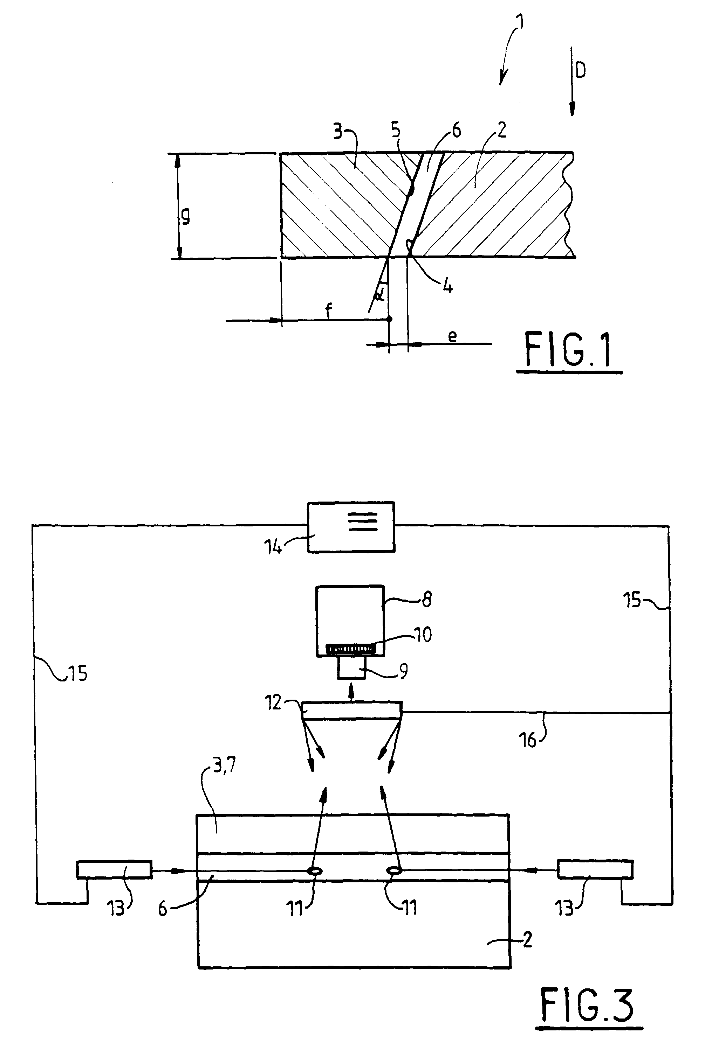

On a représenté sur la figure 1 une vue en coupe partielle d'un disque amplificateur laser 1 comprenant un disque 2 en verre phosphate dopé au néodyne et un bardage 3 en verre phosphate dopé au cuivre. Les faces adjacentes respectives 4 et 5 du disque 2 et du bardage 3 présentent une inclinaison α de 1,6° par rapport à une direction D orthogonale à la surface du disque 2. Cet angle d'inclinaison est nécessaire à l'amélioration de la diminution des phénomènes d'amplification parasite.

Les faces 4 et 5 sont collées entre elles à l'aide d'un film 6 de colle du type époxy pour solidariser le disque 2 et le bardage 3. Bien entendu, le film 6 doit être transparent aux photons et déposé de manière continue sur une faible épaisseur. Une épaisseur e comprise entre 5 et 35 µm, plus spécifiquement entre 20 et 30 µm, et avantageusement de l'ordre de 25 µm peut être envisagée.

Le procédé de collage en lui-même est tout à fait classique. La résine époxy est étalée sur la face 4 et/ou la face 5 de manière régulière pour l'obtention d'une épaisseur la plus constante possible et faciliter un collage sans bulle. L'acquisition de l'image permet de conrôler la qualité du collage.

A titre d'exemple, le bardage 3 et le disque présentent une épaisseur g de 40 mm environ et une longueur de 800 mm environ.

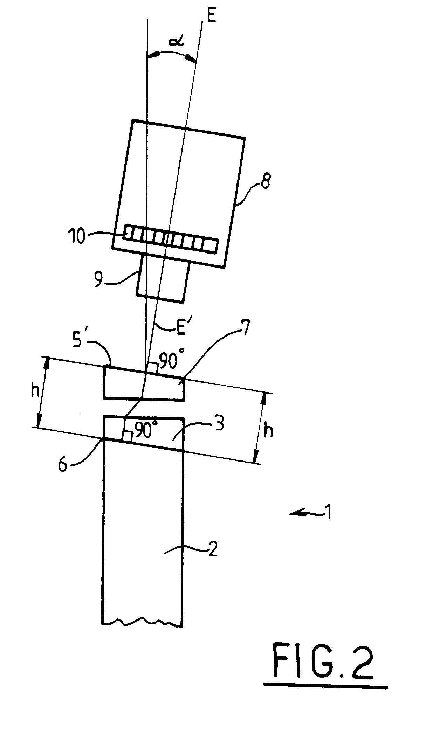

Les performances du disque amplificateur 1 sont étroitement liées à la qualité du collage. C'est pourquoi un autre aspect de l'invention réside dans le contrôle du film 6 de colle époxy. L'inclinaison α des surfaces collées 4 et 5 interdit une mise au point constante sur l'ensemble de la surface à contrôler. Ce problème est résolu par le procédé selon l'invention illustré sur la figure 2. Pour observer le film de colle 6 suivant une incidence constante, on dispose sur le trajet E du faisceau lumineux, un second bardage 7 identique au bardage 3 mais en inversant les faces, c'est-à-dire la face 5' du bardage 7 correspondant à la face 5 du bardage 3 est orientée vers l'extérieur. Le bardage 7 est disposé à une distance de quelques millimètres du bardage 3 compatible avec la mise au point de l'objectif 9 d'une caméra 8. En fait, le montage constitué par les deux bardages 3 et 7 constitue une lame à faces parallèles d'épaisseur h. Bien entendu, la caméra 8 est munie d'un capteur linéaire 10 et elle est disposée pour recevoir un faisceau lumineux E' normal à la face 5' et au film 6. Il en résulte que la caméra 8 est décalée de l'angle α par rapport à une direction verticale sur laquelle est aligné le disque amplificateur 1. De cette manière, la différence de marche entre tous les rayons est nulle, si bien que la netteté est assurée en tout point du capteur 10.

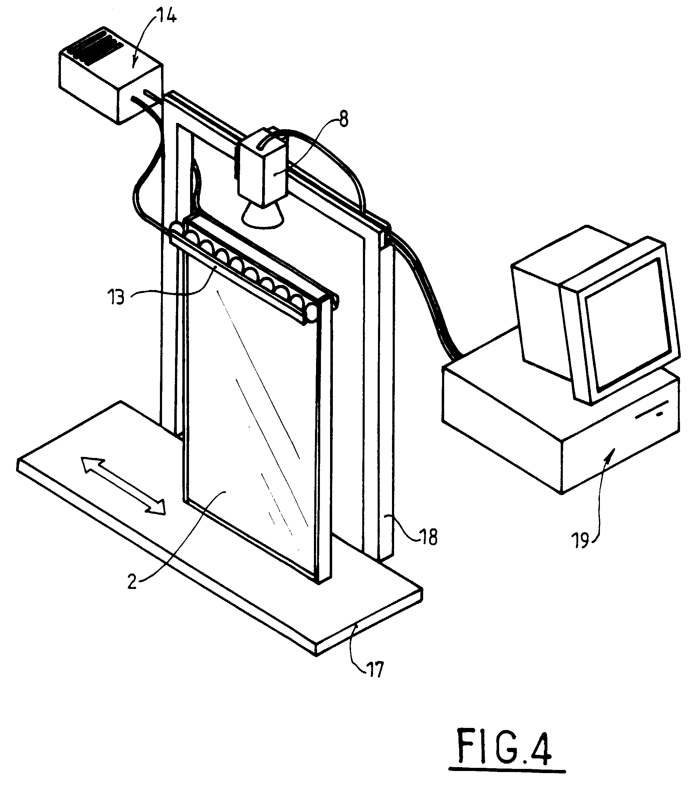

Sur la figure 3, on a représenté schématiquement une installation permettant de repérer les défauts de collage 11, par exemple des rayures, des bulles d'air ou des poussières, du disque 2 équipé de son bardage 3 et 7. La caméra 8 est disposée à la verticale du disque 2 et le film de colle 6 est éclairé par un anneau 12 de fibres optiques disposé coaxialement à l'objectif 9 de la caméra 8 et/ou par des fibres optiques 13 disposées latéralement par rapport au film de colle 6, ces fibres étant alimentées par une source 14 halogène ou fluorescente reliée à des conducteurs 15 et 16. On peut obtenir ainsi un éclairage normal au film 6 et latéral.

Sur la figure 4, on a représenté un banc de test des disques 2 qui sont amenés par un système de déplacement linéaire 17 au voisinage duquel est installé un portique 18 sur lequel est fixée la caméra 8. Le système de déplacement peut inversement déplacer la caméra par rapport au disque. Dans ce cas, l'éclairage peut être simplifié et éclairer uniquement la partie vue par la caméra. Le disque amplificateur 2 se présente ici sous la forme d'un parallélépipède rectangle sur les côtés duquel on a collé le bardage 3 par le film de colle 6 qui est éclairé par l'ensemble des fibres optiques 13 placées de manière à éclairer de part et d'autre ce film de colle.

Les images reçues par la caméra 8 sont transmises à un micro-ordinateur 19 qui traite les images suivant une séquence algorithmique. L'image est numérisée tout d'abord en gris et subit une opération de seuillage, une opération de remplissage des trous et enfin une opération de détection et de mesure. Le seuillage est une transformation qui permet d'extraire une phase de l'image par discrimination des niveaux de gris. L'image codée est transformée sur 256 niveaux de gris en une image binaire. L'opération de remplissage des trous permet d'assurer que tous les pixels inférieurs aux défauts détectés sont effectivement comptabilisés lors des mesures par comptage.

Au cours de la détection, on enregistre les défauts mis en évidence par l'éclairage et révélés par le seuillage. L'opération de mesure permet de visualiser et de stocker l'ensemble des mesures inhérentes aux défauts après avoir pris soin de calibrer l'image par l'observation d'une mire. La simplicité de ce traitement due à la qualité de l'acquisition permet de limiter considérablement le temps de traitement et donc le temps de contrôle.

A titre d'illustration, avec une caméra CCD matricielle 410 x 480 pixels, on obtient les résultats suivants :

| | |
|---|---|
| Défauts détectés | 24 |
| Surface minimale | 2,87574.10² µm² |
| Surface maximale | 1,16611.10⁵ µm² |
| Somme des surfaces défectueuses | 1,78200.10⁵ µm² |
| Surface totale analysée | 1,10428.10⁷ µm² |
| Pourcentage de défauts dans l'image | 1,61372 % |

Un collage de ce type est acceptable sur le plan industriel. Le collage doit être réalisé sur les quatre côtés du disque bardé. La cartographie, c'est-à-dire le nombre de défauts par zone, sera comparé à celle spécifiée pour acceptation ou rejet des disques.

## Revendications

1. Disque amplificateur laser comprenant un verre phosphate (2) dopé au néodyne et un bardage (3) constitué d'un verre phosphate dopé au cuivre destiné à piéger les photons parasites, caractérisé en ce que l'assemblage des deux verres (2, 3) est obtenu à l'aide d'un film de colle (6) d'épaisseur comprise entre environ 5 et 35 µm.

2. Disque amplificateur laser selon la revendication 1, caractérisé en ce que le film de colle (6) est constitué par une couche de résine époxy.

3. Disque amplificateur laser selon la revendication 1 ou 2, caractérisé en ce que le film de colle (6) présente une épaisseur comprise entre 20 et 30 µm environ.

4. Disque amplification laser selon l'une quelconque des revendications 1 à 3, caractérisé en ce que le film de colle (6) présente une épaisseur voisine de 25 µm.

5. Procédé pour contrôler le collage du bardage (3) d'un disque amplificateur laser selon l'une quelconque des revendications précédentes, caractérisé en ce qu'il consiste :
- à réaliser une lame à faces parallèles en disposant au voisinage du bardage collé (3) un bardage supplémentaire (7) identique en position inversée pour obtenir une incidence normale à la direction d'observation,
- à éclairer normalement le film de colle (6) à travers les deux épaisseurs du bardage (3, 7),
- à repérer à l'aide d'une caméra (8) les défauts de collage des deux verres collés (2, 3), et
- à numériser l'image obtenue en niveaux de gris pour repérer les défauts dans le film de colle (6) et mesurer leur taille.

6. Procédé selon la revendication 5, caractérisé en ce qu'il consiste à éclairer également latéralement le film de colle (6) de part et d'autre de celui-ci.

7. Procédé selon la revendication 5 ou 6, caractérisé en ce qu'il consiste à utiliser une caméra (8) du type CCD.

8. Procédé selon l'une quelconque des revendications 5 à 7, caractérisé en ce qu'il consiste à éclairer le film de colle (6) à partir d'une source lumineuse (14) halogène ou fluorescente.

9. Procédé selon la revendication 8, caractérisé en ce qu'il consiste à transmettre l'éclairage normal par un anneau (12) de fibres optiques monté autour de l'objectif (9) de la caméra (8), et à transmettre l'éclairage latéral par des fibres optiques (13) disposées de part et d'autre du film de colle (6).
